# EUROPEAN PATENT SPECIFICATION

(11) **EP 1 070 536 B1**
(45) Date of publication and mention of the grant of the patent: **29.10.2003**
(21) Application number: 00116907.7
(22) Date of filing: 11.09.1995
(51) Int. Cl.: B01J 19/30, B01J 19/32

(54) **Folded packing**
Faltbarer Füllkörper
Elément de garnissage pliable

(43) Date of publication of application: 24.01.2001
(62) Divisional of application: 95306344.3
(73) Proprietor: LANTEC PRODUCTS, INC., Agoura Hills, California 91301 (US)
(72) Inventor: Lang, Ko C., Agoura Hills, California 91301 (US)
(74) Representative: Gilmour, David Cedric Franklyn

(56) References cited:
- EP-A- 0 150 900
- EP-A- 0 259 022
- WO-A-95/12451
- DE-A- 1 519 668
- US-A- 4 195 043

## Description

### Technical Field

The present invention relates to fluid contact structures for use in packed towers and, more particularly, this invention relates to elements formed by folding strip material into complex 3-dimensional shapes.

### Background of the Invention

Packed towers are used for mass transfer operations such as absorption, desorption, extraction, scrubbing and the like. The type of packing is chosen for its mechanical strength, resistance to corrosion, cost, capacity and efficiency. The function of the packing is to facilitate mass transfer between two fluid streams, usually moving countercurrent to each other. Efficiency and rate of mass transfer are enhanced by providing large surface area in the packing to facilitate contact of the fluids and by breaking the liquid into very fine droplets to enhance mass transfer to a gas phase.

Packing can be in the form of trays or packing bodies that are randomly packed into a column or tower. Originally, packing elements were ceramic or carbon rings, saddles, partition rings or drip point tiles. More modern packing bodies have a uniform distribution of open cellular units and provide higher efficiency and performance. They have very high wettable surface area and low resistance to fluid flow. They are effective in any orientation. The high efficiency packing bodies can be dump loaded into a column or tower and result in uniform distribution of the packing bodies without having blocked regions or void regions. These packing bodies permit streams to be processed at faster volumetric rates. Efficiency is increased and processing cost is reduced. The high efficiency packing bodies have complex dimensional shapes, usually with numerous struts and projections of different sizes and disposed at different angles and positions throughout the packing body.

However, the intricate structure of the uniform geometric shapes required for the high efficiency packing bodies requires that they be formed by casting, injection molding, stamping or extrusion, all expensive processes. Extrusion processes are limited since they generally are used to form shapes with axial symmetry. Also molding processes forbid the use of shapes such as undercuts and overlapping shapes since they cannot be released from ordinary molds. Multipart molds are prohibitively expensive. Thus, much of the internal volume is open space decreasing effective surface area. Baffle structure perpendicular to the longitudinal axis of the packing body is less than the optimum.

Metal packing bodies or elements are required for certain high temperature or chemically aggressive process streams. Most metal packing bodies are formed from metal blanks rolled into a tubular or spherical shape. Tabs or tongues may be cut and bent toward the interior to provide projections to increase surface area and enhance mixing and droplet formation. Again, there is substantial open area and efficiency is less than desired.

U.S. Patent No. 4,724,593 describes an improved method for manufacturing high performance, symmetrical, open volumed packing bodies. The packing bodies have uniform geometrical configurations and are formed from a wide variety of materials into a wide variety of shapes and geometries. The process is simple and economical. A strip of sheet material has a pattern of repeating plates which are connected by intermediate ribbons of the sheet material. The plates may be perforated or contain projections. The plates are bent perpendicular to the longitudinal axis of the strip. The intermediate ribbons are then bent to bring the longitudinal axis of the bent plates into close proximity and in substantial parallel alignment.

The high performance packing bodies have performed well and have captured a significant share of the market. They have been manufactured in plastic or metal materials. These packings have low pressure drop, high mass transfer and packing efficiency. They have a high population of drip points per volume provided by a uniform distribution of surface elements. An open, non-obstructive structure provides low pressure drop while dispersing and distributing flow in both longitudinal and lateral directions.

While the void volume of the interior structure of the packing body is less than prior high efficiency packing bodies, the structure normal to the longitudinal axis is still difficult to provide and the manufacture requires several bending and rolling operations to form the sheet material into an element.

An improved packing body is disclosed in copending application, Serial No. 08/147,806, filed November 3, 1993. The improved packing bodies are also formed from a strip of material. However, the perforated panels are not separated by ribbon connectors. A perforated strip of material is simply rolled into a spiral or into a concentric cylinder structure. The outer curved end of the strip is latched to the curved surface of the preceding revolution of the spiral. Baffle or tab elements disposed transverse to the surface of the strip efficiently disrupt the fluid stream. The tabs can be rod like elements raised from the surface. The improved packing bodies have a high degree of open space, from 30% to 98%. Surprisingly, the rolled packing bodies are found to provide better mass transfer and efficiency than prior packing body structures.

### Statement Of The Invention

The present invention provides a packing body as claimed in claim 1.

The present invention also provides a method of forming a packing body as claimed in any of claims 12, 13 or 14.

In accordance with the invention packing bodies with complex shapes are also produced in a simplified manner from apertured plates.

The projections from the surface of the segments can also be used as fluid baffles to disrupt large droplets, to create local turbulence, to increase contact between gas and liquid and to facilitate mass transfer. The projections can be polygonal tabs raised from the surface. The tabs can be diamond, rectangular or circular in shape. Thin cylindrical rod projections from the surface have been found to be very effective in facilitating mass transfer while providing an open volume of above 30% with very low pressure drop. The rod projections can latch into apertures in the adjacent plate to provide stable separation between plates.

Another method of forming efficient baffle and apertures is to provide a pattern of slits in a strip of metal or other expandable material. When the strip is stretched, the slits expand and the panels of the strip of material between adjacent parallel slits tilt upwardly at an angle to the surface. The slit widens into an elongated aperture.

The stacked unit of plates can be formed from strips divided into plate segments. The plate segments on each side of a medial plate segment are folded toward the top surface of the medial plate segment and plate segments on the other side are folded toward the bottom surface of the medial plate segment. The strip may be provided with single or double fold lines to facilitate folding the strip material without bending or stressing the strip material.

The folded strip has a high degree of open space provided by perforations, at least about 30% of the strip is open space, preferably from 50% to 98% of the strip is open space. The baffle tabs attached to the strip provide increased surface for fluid contact. If the tabs are at angle to the longitudinal axis of the rolled packing body they could be in the path of the flow liquid and will act to disrupt the liquid into smaller droplets. The tabs can be any shape such as curved, rectangular, triangular, square, etc. The tabs can be formed by cutting a partial perimeter of the tab from the sheet material leaving a live hinge. The live hinge is then bent to dispose the tab away from the sheet. A strip could also be molded with tabs raised from the surface of the strip. The raised tabs simultaneously form apertures in the sheet. The tabs can also act as spacers between adjacent arcuate sections of the rolled strip. The tabs can face upwardly and/or downwardly. The tabs can be disposed normal to the surface of the sheet or at a lesser or greater angle, usually from 20 degrees to 160 degrees.

The strip may be formed of a material that has a flexible and bendable first state such as metal, B-stage thermosetting resins, thermoplastic resins or ceramic precursors such as metal oxides dispersed in organic binder resin. The perforated strip can be formed by stamping, cutting and bending operations with metal strips or certain plastic strips. Other strips can be formed by casting, molding or extrusion of ceramic or resin materials. After the bent strip is in its final configuration, the bent strip can be fired to cure the resin or convert the precursor to a final ceramic state.

The packing body of the invention can be produced from much simpler starting materials. Even if molds are used to form the strips, the molds are much cheaper and simpler than molds used to form prior high performance packing bodies. The method of the invention can be used to form packing bodies in complex shapes that can not be practically made by other techniques. The packing bodies of the invention can be produced at much lower costs and can be made from plastic, metal or ceramic.

These and many other features and attendant advantages of the invention will become apparent as the invention becomes better understood by reference to the following detailed description when considered in conjunction with the accompanying drawings.

### Brief Description of the Drawings

Figure 1 is a top view in elevation of a first embodiment of an apertured strip for forming a packing body according to the invention;
Figure 2 is a top view in elevation of a second embodiment of an apertured strip for forming a folded packing body;
Figure 3 is a top view in elevation of a further embodiment of a strip for forming a folded packing body;
Figure 4 is a perspective view of a folded packing body formed from the strip of Figure 3;
Figure 5 is a top view in elevation of another embodiment of a strip for forming a folded packing body;
Figure 6 is a perspective view of a packing body formed by folding the strip of Figure 5;
Figure 7 is a perspective view of the strip of Figure 2 folded into a packing body;
Figure 8 is a perspective view of a packing body formed from folding the strip of Figure 1;
Figure 9 is a top view of another embodiment of a strip containing a plurality of rod-like projections;
Figure 10 is a perspective view of a folded packing body formed from the strip of Figure 9;
Figure 11 is a top view in elevation of yet another embodiment of an apertured strip with attached plates;
Figure 12 is a perspective assembly view of the folded strip of Figure 11 joined to the plates;
Figure 13 is a top view in elevation of an expandable strip with slits; and
Figure 14 is a top view of an expanded metal strip.

### Detailed Description Of The Invention

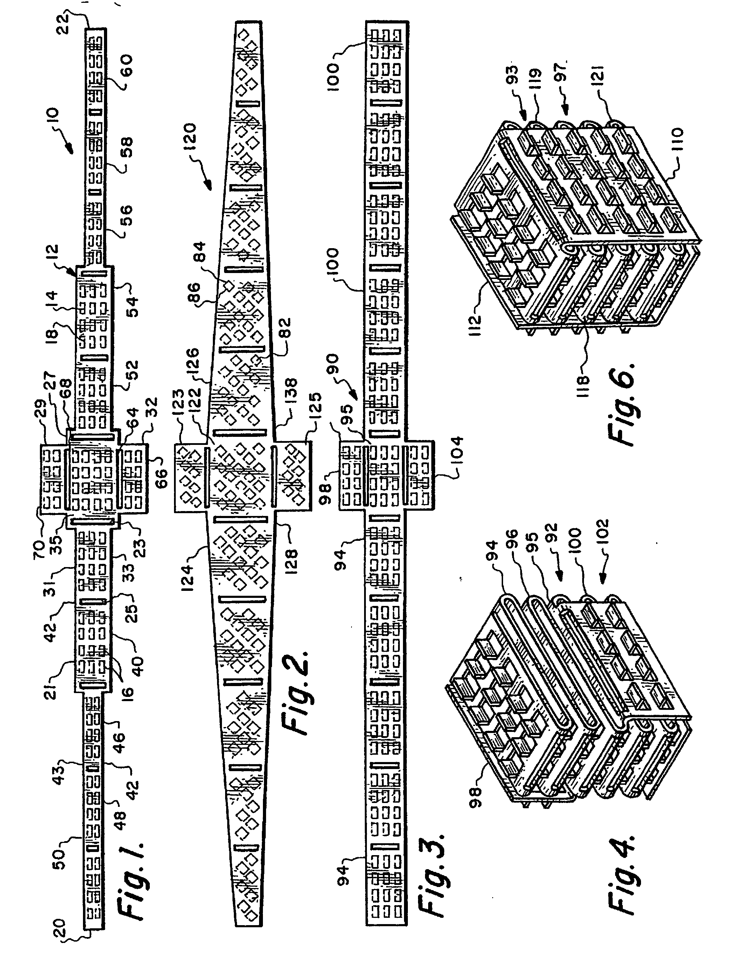

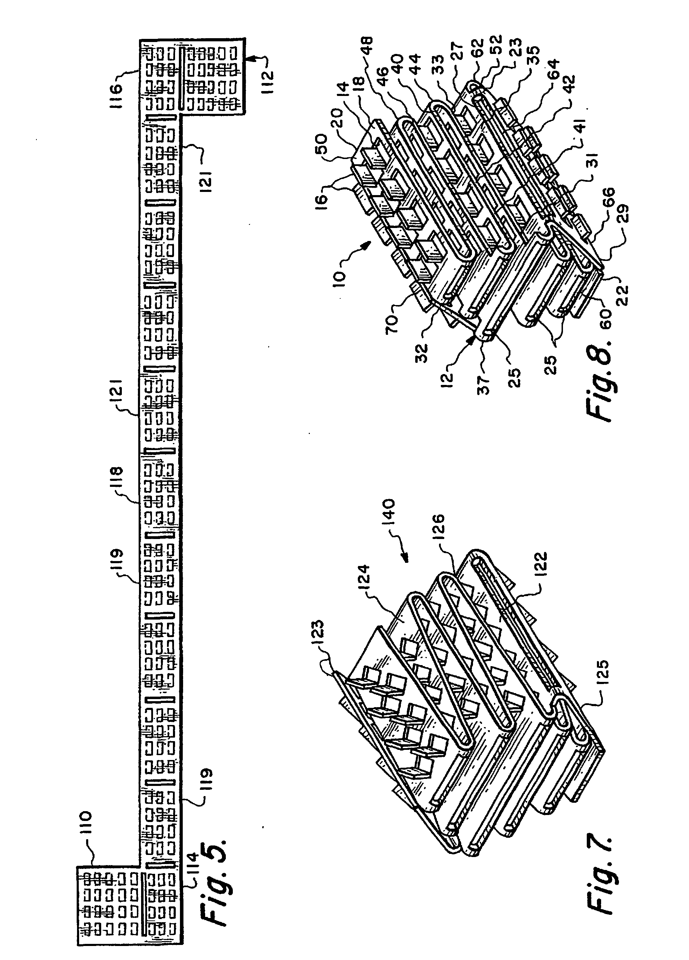

Referring now to Figures 1 and 8, the improved packing body 10 is formed of a strip 12 having at least 30% open space provided by apertures 14. The strip 12 can have a thickness from 0.1 to 15mm. In the case of metal, the thickness is usually from 0.2 to 0.4mm. In the case of plastic, the thickness is usually from 0.5 to 3mm, preferably 1 to 2mm and in the case of ceramic, the strip has a thickness from 2 to 8mm.

The strip 12 may also include baffle elements that project from the surface 18 of the strip 12 such as rod like struts or polygonal elements such as rectangular baffles 16. The strip is continuous from a first end wall 20 to a second end wall 22. The strip is divided into segments 21 separated by folding bands 23. The bands may contain a transverse slot 25 and can contain a score line, not shown, to act as a live hinge. The medial segment 27 which is usually the middle segment can contain a pair of side segments 29, 32. A packing body 10 containing at least 2 segments is formed by folding the front segment 31 adjacent the medial segment 27 along fold band 23 at a right angle to the longitudinal axis of the strip 12 until the top surface 33 of the segment 31 is substantially parallel to the top surface 35 of the medial segment 27. The folding band 23 will form a curved side edge 37 containing slot 25.

The next adjacent front segment 40 is then folded along folding band 42 toward the segment 31 until the original bottom surface of the segment 41 is substantially parallel to the folded segment 31. Folded band 42 forms a second curved side edge 44 containing a slot 25. Front segments 46, 48 and 50 are alternately folded into parallel disposition.

The rear segments 52, 54, 56, 58 and 60 are folded by first folding segment 52 along band 62 such that the bottom surface 64 of the segment 52 is substantially parallel to the bottom surface of the medial segment 27. The folded band 23 forms a curved edge 62. Segments 54, 56, 58 and 60 are alternately folded along bands 23 to form a stack of segments connected by curved side joints. Lower side segment 32 is folded along slot 64 until the lower edge 66 is adjacent the end rear segment 60. Upper side segment 29 is folded along the slot 68 until the upper edge 70 of the side segment is adjacent the end front segment 50.

The strip has a pattern of apertures 14 formed by raised rectangular baffle elements 16. The baffle elements in this embodiment of a packing body are disposed parallel to the longitudinal axis of the strip. The baffle elements are attached to the surface of the strip along an edge 43 which is joined to the strip. The baffle elements may project upwardly, downwardly or some may project upwardly and some may project downwardly.

The length and width of the strip 12 are determined by the nominal diameter and height desired for the packing body 10, the size of segments and the surface area. Packing bodies generally have a diameter from 1 to 12 inches (25.4 to 304.8 mm) and the height is about 1 to 10 inches (25.4 to 254.0 mm). Usually the diameter to height ratio is at least 1. packing body will generally have a packing factor from about 3 to 65 per foot (about 10 to 213 per meter) and a surface area from about 10 to 200 ft² / cu.ft. (about 33 to 656 m²/m³)

The width of the strip at its widest dimension corresponds to the height of the packing body. Generally, the strip will be at least 5 inches (127 mm) long up to 100 inches (2.54 m) or more. The spacing between folded segments depends on the height of the baffle elements. Generally, the baffle elements have a height from 1/16 to 2.0 inches (1.6 mm to 50.8 mm). The packing body will have at least 2 segments preferably from 3 to 30 segments. Random packing bodies are generally from 1 to 5 inches (25.4 to 127 mm) in nominal diameter, have a height from 1 to 4 inches (25.4 to 101.6 mm) and a baffle from 1/16 to 3/4 of an inch (1.6 to 19 mm). The method of the invention could also be used to produce large molecular structured packing bodies in cubic or rectangular-shaped modules such as 1' x 1' x 1'; 2' x 1' x 1' or 3' x 1' x 1'. The structured modules are placed one module at a time into the tower until the tower is filled.

The strip can be in the form of a rectangle having parallel side walls as in Figures 3 and 5 or the strip can have shaped sided walls such as convex, concave, patterned or converging as in Figure 2. The segments of the strip can step down in width in discrete steps as in Figure 1. If the side walls of the strip are parallel, the strip will fold into a cubic or rectangular-shaped body. If the strip has tapered or stepped side walls, it will fold into an x-shaped structure if the smaller medial segment is disposed to the interior and into a polygon-shaped body if the larger medial segment is disposed to the interior of the packing body 10 as shown in Figures 7 and 8.

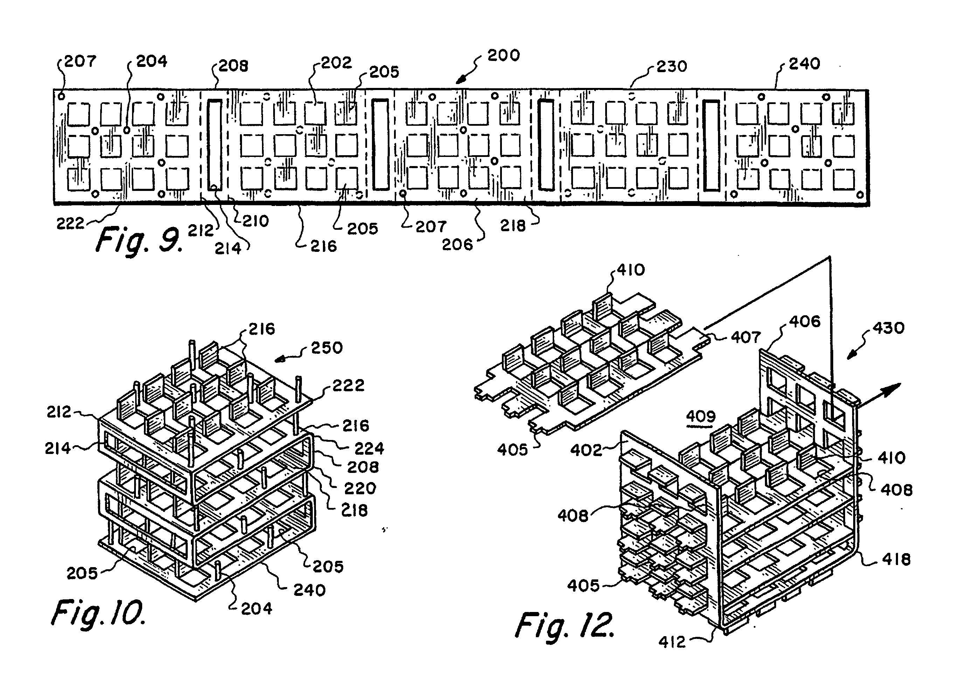

The strip shown in Figures 9 and 10 has a very open structure like a mesh or a screen. In the embodiments shown in Figures 1-8, the strip is formed of sheet material. The baffle elements and the apertures can be formed by stamping and bending appropriate materials such as metal, certain plastics and certain precursor ceramics or they can be formed by molding in simple molding cavities or by casting. The apertures are formed in sheet material raised from the surface along integral connection joints to form the baffle elements. In the case of bendable materials, the baffle element can be cut along three sides and bent along the fourth side to form the apertures.

In Figures 1, 3 and 5 the baffle elements are shown bent away from the surface of the strip along a connection joint parallel to the longitudinal axis of the strip. In Figure 2, the baffle elements 82 are shown with cut lines 84 along 3 sides joining bend line 86 which is at a 45 degree angle to the longitudinal axis of the strip.

The rectangular strip 90 of Figure 3 is similar to the stepped down strip 12 of Figure 1. When the strip 90 is folded as in Figure 1 it will form a rectangular packing body 92 as shown in Figure 4 with the front segments 94 folded on top of the medial segment 95 to form a top stack 96 with side segment 98 folded upwardly. The rear segments 100 similarly fold downwardly to form a bottom stack 102 with side segment 104 folded downwardly.

Figure 5 is similar to Figure 3 except that the side segments 110, 112 are disposed on opposite sides of the end front segment 114 and end rear segment 116. The front segments 119 are alternately folded on top of the medial segment 118 to form a top stack 93 and the rear segments 121 are alternately folded on the bottom of the medial segment 118 to form a bottom stack as shown in Figure 6. The side segment 110 is then folded downwardly along the side edges of the stack and the side segment 112 is folded upwardly along the opposite side edges of the stack to form a packing body 97.

The strip 120 shown in Figure 2 is tapered in both directions. It has a medial segment 122 and adjacent front and rear segments 124, 126 with bending bands 128 separating the segments. The baffle elements 82 are rectangular with the sides rotated 45 degrees with respect to the longitudinal axis of the strip 120.

When the top segments 124 are folded and stacked on top of the medial segment 122 and the bottom segments are folded and stacked along the bottom of the medial segment 122. A packing body 140 having hexagon cross-section as shown in Figure 7 is formed. The side segment 123 is folded upwardly and the other side segment 125 is folded downwardly.

If the strip is formed of resilient material, the shape of the packing body can be stabilized by providing latches between apertures in adjacent segments by securing the side edges of the segments to each other or to the medial segment or by securing the side edges of the segments to the side segments by mechanical latches, adhesives or thermal bonding in the case of thermoplastic resins or metals.

A further embodiment of a packing body is shown in Figures 9 and 10. A strip 200 has a very open structure provided by apertures 202. A pattern of rod-like baffle elements 204 are raised from the surface 206 of the strip 200. Some of the elements 207 are longer and are adapted to enter an aperture 205 in an opposed segment and latch the segments together.

Each segment is separated from the adjacent segment by a band 208 containing a set of parallel score lines 210, 212. The band may also contain an elongated aperture 214. As shown in Figure 10 as the first front segment 216 is folded, the band 208 will fold along the live hinge 220 formed at score line 210 and the band 208 will be disposed at a right angle to the medial segment 218. The vertical band 208 will then fold along score line 212 at a right angle to the next front segment 222 to form a second live hinge 224. The front segment 222 is bent to be disposed parallel to the medial segment 218.

Some of the longer baffle elements 207 projecting from the surface of the medial segment 218 are snapped into the opposed apertures 205 in the folded segment 216. The rear segments 230 and 240 are then alternately folded to form the packing body 250 shown in Figure 10.

Another method of assembling a packing body is shown in Figures 11 and 12. A strip 400 has three segments 402, 404, 406 containing apertures 408 and baffles 410 and a series of panels 401, 403 connected by tabs 405 between projections 407. The panels 401, 403 also contain apertures 408 and baffles 410. The end segments 402, 406 are bent upwardly along scored fold lines 418, 412 to form a u-shaped shell 409. The panels 401 and 403 are separated by breaking the tabs 405. The individual panels 401, 403 having the same length and width as the medial segment 404 are placed within the shell 409 in a position parallel to the medial segment 404. The side projections 407 are inserted into the apertures 408 in the segments 402, 406 to lock the structure together into a packing body 430. The individual segments could be adhered together with a set of side strips or individual side plates or segments.

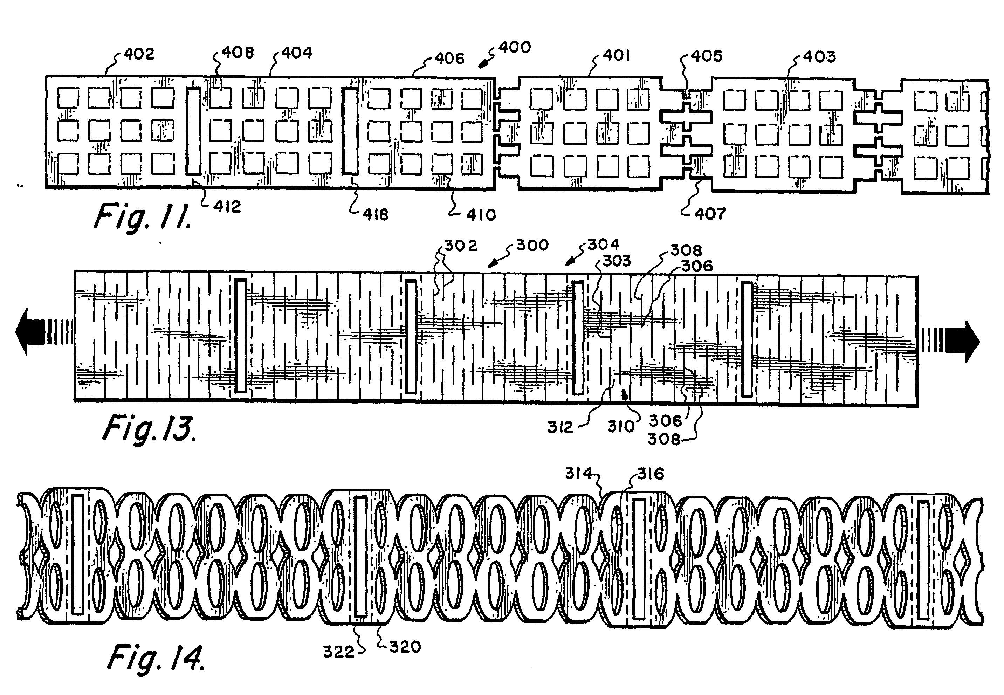

Another way to form an apertured, baffled strip in a single operation is shown in Figures 13 and 14. A strip 300 of expandable material such as metal contains a pattern of slits 302. The slits 302 are preferably disposed transverse to the longitudinal axis of the strip 300. The strip 303 in a first row 304 overlap the ends 306 of two slits 308 in an adjacent row 310. As the strip 300 is expanded the panels 312 between slits such as 303 and 306 in adjacent rows will tilt upwardly to form baffle elements 314 and apertures 316. The strip 300 can be rolled to form a cylindrical packing body or folded along fold lines 320, 322 to form a rectangular folded packing body, not shown.

The invention provides a high performance packing bodies in complex shapes by simple, low cost fabrication techniques. The intricate shapes are defined in planar materials readily formed by casting, molding, stamping or extrusion. The manufacture is completed by a simple folding step. By use of strips having different widths, lengths or thicknesses, packing bodies having complex shapes can be produced. Packing bodies of different sizes can be filled into a tower.

It is to be realized that only preferred embodiments of the invention have been described and that numerous substitutions, modifications and alterations are permissible without departing from the scope of the invention as defined in the following claims.

## Claims

1. A packing body (10; 140) comprising:
an elongated, continuous planar strip (12; 90; 120; 200; 300; 400) having a longitudinal axis containing a plurality of apertures (408; 316) and baffle elements (16; 82; 204; 410; 314) formed on the strip by means of a tab of strip material raised from the strip at an angle of at least 10 degrees and connected along only one edge to the strip forming said aperture (408; 316) and said strip being divided into at least three flat panel segments (21) along the longitudinal axis comprising a medial panel segment (27; 95; 121; 122; 404), a first front panel segment (31; 114; 94; 402) and a first rear panel segment (52; 116; 100; 406), said medial panel segment (27; 95; 121; 122; 404) having a front edge and a rear edge transverse to said longitudinal axis and having a top surface and a bottom surface;
the first front panel segment (31; 114; 94; 402) being adjacent the front edge; and a first fold present in said elongated strip along said front edge to a first fold present in said elongated strip along said front edge to fold said first front panel segment toward the top surface of the medial panel segment until said first front panel segment is substantially parallel to said top surface, said first rear panel segment (52; 116; 100; 406) being adjacent said rear edge and a second fold is present in said elongated strip along said rear edge to fold said first rear panel segment toward the bottom surface of the medial segment until said first rear segment is substantially parallel to said bottom surface.

2. A packing body according to claim 1 in which the segments adjacent the medial segment (27; 95; 121; 122; 404) have a width smaller than the width of the medial segment.

3. A packing body according to claim 1 and 2 including 1-10 front panel segments (46; 48; 50; 118) consecutively connected along the longitudinal axis, adjacent from panel segments having a common edge and being folded along said common edge with the bottom surface thereof facing the top surface of the preceding folded panel segment and including 1-10 rear panel segments (52; 54; 56; 58; 60; 121) consecutively connected along the longitudinal axis, adjacent rear panel segments having common edge and being folded along said common edge with the top surface thereof facing the bottom surface of the preceding folded panel segment.

4. A packing body according to any preceding claims in which the fluid baffle elements (16; 82; 204; 410) are formed of strip material disposed upwardly and away from the top or bottom surface of the strip.

5. A packing body according to any preceding claims in which the fluid baffle elements (16; 82; 204; 410) are molded with the strip.

6. A packing body according to any preceding claim in which at least some of the fluid baffle elements (16; 82; 204; 410) are perpendicular to the longitudinal axis of the panels.

7. A packing body according to any preceding claim in which the strip (12; 90; 120; 200; 300; 400) is formed of metal, synthetic resin or ceramic.

8. A packing body according to any preceding claim in which the apertures (408; 316) are elongated slots disposed transverse to the longitudinal axis of the strip.

9. A packing body according to any preceding claim further including a live hinge (418; 412) being disposed along at least one of said folds.

10. A packing body according to claim 9 in which said fold includes a pair of parallel live hinges spaced on each side of a transverse band of strip material and said band forms an angle of about 90 degrees with the surface of adjacent segments.

11. A packing body according to any preceding claim further including at least one side panel (98; 104; 110; 112) joined to a side edge of one of the stacked panels and being folded adjacent the edges of the stacked panels.

12. A method of forming a packing body according to claim 1 for use in fluid contact comprising the steps of;
forming an elongated, continuous strip of flexible, foldable material having a pattern of apertures and baffles in the form of raised strip material connected to an edge of a plurality of said apertures;
providing fold lines spaced along the longitudinal axis of the strip to form flat panel segments having fold lines on each front edge thereof;
folding the strip along a front fold line between a first flat, front panel segment and a second flat panel segment of the strip until the bottom surface of a front panel segment adjacent the second panel segment is substantially parallel to the top surface of the second panel segment; and
folding the strip along a rear fold line between the second flat panel segment and a third flat panel segment until the top surface of the third panel segment is substantially parallel to the bottom surface of the second panel segment.

13. A method of manufacturing a packing body according to claim 1 for use in fluid contact comprising the steps of;
forming slits in an elongate strip of material;
stretching the strip along longitudinal axis such that the slits expand into elongated slots and the strip material between adjacent slots are raised from the surface at an angle from 10 degrees to 80 degrees; and
folding the strip along fold lines transverse to the longitudinal axis of the strip until adjacent panel segments are substantially parallel to each other.

14. A method of forming a packing body according to claim 1 for use in fluid contact comprising the steps of stamping a continuous strip to form baffles and fold lines for forming panel segments;
raising the baffles from the surface of the strip; and
folding the strip along the fold lines until the panel segments are substantially parallel to each other.

## Patentansprüche

1. Füllkörper (10; 140), umfassend:
einen langgestreckten durchgehenden planen Streifen (12; 90; 120; 200; 300; 400) mit einer Längsachse, der eine Mehrzahl von Öffnungen (408; 316) und Prallflächenelementen (16; 82; 204; 410; 314) enthält, die mittels einer Nase von Streifenmaterial auf dem Streifen gebildet sind, die sich unter einem Winkel von mindestens 10 Grad von dem Streifen aufrichtet und entlang nur einer Kante mit dem Streifen verbunden ist, wobei die Öffnung (408; 316) gebildet wird, und wobei der Streifen in mindestens drei ebene Tafelsegmente (21) entlang der Längsachse eingeteilt ist, umfassend ein mittleres Tafelsegment (27; 95; 121; 122; 404), ein erstes vorderes Tafelsegment (31; 114; 94; 402) und ein erstes hinteres Tafelsegment (52; 116; 100; 406), wobei das mittlere Tafelsegment (27; 95; 121; 122; 404) eine Vorderkante und eine Hinterkante aufweist, die zu der Längsachse quer verlaufen, und eine Oberseite und eine Unterseite aufweist;
wobei das erste vordere Tafelsegment (31; 114; 94; 402) zur Vorderkante benachbart ist; und eine erste Faltung, die in dem langgestreckten Streifen entlang der Vorderkante vorhanden ist, um das erste vordere Tafelsegment in Richtung auf die Oberseite des mittleren Tafelsegments zu falten, bis das erste vordere Tafelsegment im Wesentlichen parallel zu der Oberseite ist, wobei das erste hintere Tafelsegment (52; 116; 100; 406) zu der Hinterkante benachbart ist, und eine zweite Faltung in dem langgestreckten Streifen entlang der Hinterkante vorhanden ist, um das erste hintere Tafelsegment in Richtung auf die Unterseite des mittleren Segments zu falten, bis das erste hintere Segment im Wesentlichen parallel zu der Unterseite ist.

2. Füllkörper nach Anspruch 1, bei dem die zu dem mittleren Segment (27; 95; 121; 122; 404) benachbarten Segmente eine Breite aufweisen, die kleiner ist als die Breite des mittleren Segments.

3. Füllkörper nach Anspruch 1 und 2, umfassend 1-10 vordere Tafelsegmente (46; 48; 50; 118), die entlang der Längsachse aufeinanderfolgend verbunden sind, wobei sie benachbart von Tafelsegmenten eine gemeinsame Kante aufweisen und entlang der gemeinsamen Kante gefaltet sind, wobei ihre Unterseite der Oberseite des vorhergehenden gefalteten Tafelsegments zugekehrt ist, und umfassend 1-10 hintere Tafelsegmente (52; 54; 56; 58; 60; 121), die entlang der Längsachse aufeinanderfolgend verbunden sind, wobei benachbarte hintere Tafelsegmente eine gemeinsame Kante aufweisen und entlang der gemeinsamen Kante gefaltet sind, wobei ihre Oberseite der Unterseite des vorhergehenden gefalteten Tafelsegments zugekehrt ist.

4. Füllkörper nach einem der vorangehenden Ansprüche, bei dem die Fluidprallflächenelemente (16; 82; 204; 410) von Streifenmaterial gebildet sind, das nach oben und weg von der Ober- oder Unterseite des Streifens angeordnet ist.

5. Füllkörper nach einem der vorangehenden Ansprüche, bei dem die Fluidprallflächenelemente (16; 82; 204; 410) mit dem Streifen geformt sind.

6. Füllkörper nach einem vorangehenden Anspruch, bei dem mindestens einige von den Fluidprallflächenelementen (16; 82; 204; 410) senkrecht zur Längsachse der Tafeln sind.

7. Füllkörper nach einem vorangehenden Anspruch, bei dem der Streifen (12; 90; 120; 200; 300; 400) aus Metall, Kunstharz oder Keramik gebildet ist.

8. Füllkörper nach einem vorangehenden Anspruch, bei dem die Öffnungen (408; 316) langgestreckte Spalte sind, die quer zur Längsachse des Streifens angeordnet sind.

9. Füllkörper nach einem vorangehenden Anspruch, weiter umfassend ein Faltscharnier (418; 412), das entlang mindestens einer der Faltungen angeordnet ist.

10. Füllkörper nach Anspruch 9, bei dem die Faltung ein Paar von parallelen Faltscharnieren umfasst, die auf jeder Seite eines Querbands von Streifenmaterial beabstandet sind, und das Band einen Winkel von etwa 90 Grad mit der Oberfläche von benachbarten Segmenten bildet.

11. Füllkörper nach einem vorangehenden Anspruch, weiter umfassend mindestens eine Seitentafel (98; 104; 110; 112), die mit einer Seitenkante von einer der gestapelten Tafeln verbunden ist und benachbart zu den Kanten der gestapelten Tafeln gefaltet ist.

12. Verfahren zur Bildung eines Füllkörpers nach Anspruch 1 zur Verwendung in Fluidkontakt, umfassend die Schritte:
Bilden eines langgestreckten durchgehenden Streifens von flexiblem faltbarem Material mit einem Muster von Öffnungen und Prallflächen in der Form von aufgerichtetem Streifenmaterial., das mit einer Kante einer Mehrzahl der Öffnungen verbunden ist;
Bereitstellen von Faltlinien, die entlang der Längsachse des Streifens beabstandet sind, um ebene Tafelsegmente zu bilden, die Faltlinien auf jeder ihrer Vorderkante aufweisen;
Falten des Streifens entlang einer vorderen Faltlinie zwischen einem ersten ebenen vorderen Tafelsegment und einem zweiten ebenen Tafelsegment des Streifens, bis die Unterseite eines zu dem zweiten Tafelsegment benachbarten vorderen Tafelsegments im Wesentlichen parallel zur Oberseite des zweiten Tafelsegments ist; und
Falten des Streifens entlang einer hinteren Faltlinie zwischen dem zweiten ebenen Tafelsegment und einem dritten ebenen Tafelsegment bis die Oberseite des dritten Tafelsegments im Wesentlichen parallel zur Unterseite des zweiten Tafelsegments ist.

13. Verfahren zur Herstellung eines Füllkörpers nach Anspruch 1 zur Verwendung in Fluidkontakt, umfassend die Schritte:
Bilden von Schlitzen in einem langgestreckten Streifen von Material;
Strecken des Streifens entlang einer Längsachse, so dass sich die Schlitze in langgestreckte Spalte aufweiten und das Streifenmaterial zwischen benachbarten Spalten unter einem Winkel von 10 Grad bis 80 Grad von der Oberfläche aufgerichtet wird; und
Falten des Streifens entlang Faltlinien quer zur Längsachse des Streifens bis benachbarte Tafelsegmente im Wesentlichen parallel zueinander sind.

14. Verfahren zur Bildung eines Füllkörpers nach Anspruch 1 zur Verwendung in Fluidkontakt, umfassend die Schritte: Stanzen eines durchgehenden Streifens, um Prallflächen und Faltlinien zur Bildung von Tafelsegmenten zu bilden;
Aufrichten der Prallflächen von der Oberfläche des Streifens; und
Falten des Streifens entlang der Faltlinien, bis die Tafelsegmente im Wesentlichen parallel zueinander sind.

## Revendications

1. Corps d'emballage (10;140) comprenant :
une bande continue plane, oblongue (12;90;120;200;300;400) présentant un axe longitudinal contenant plusieurs ouvertures (408;316) et des éléments de chicane (16;82;204;410;314) formés sur la bande au moyen d'une patte de matériau de bande relevée de la bande selon un angle d'au moins 10 degrés et reliée seulement le long d'un bord à la bande formant ladite ouverture (408;316), et ladite bande étant divisée en au moins trois segments de panneau plats (21) le long de l'axe longitudinal comprenant un segment de panneau médian (27;95;121;122;404), un premier segment de panneau avant (31;114;94;402) et un premier segment de panneau arrière (52;116;100;406), ledit segment de panneau médian (27;95;121;122;404) présentant un bord avant et un bord arrière transversal audit axe longitudinal et présentant une surface supérieure et une surface inférieure;
le premier segment de panneau avant (31;114;94;402) étant adjacent au bord avant; et un premier pli présent dans ladite bande oblongue le long dudit bord avant pour plier ledit premier segment de panneau avant vers la surface supéricure du segment de panneau médian jusqu'à ce que ledit segment de panneau avant soit sensiblement parallèle à ladite surface supérieure, ledit premier segment de panneau arrière (52;116;100;406) étant adjacent audit bord arrière, et un deuxième pli est présent dans ladite bande oblongue le long dudit bord arrière pour plier ledit premier segment de panneau arrière vers la surface inférieure du segment médian jusqu'à ce que ledit premier segment arrière soit sensiblement parallèle à ladite surface inférieure.

2. Corps d'emballage selon la revendication 1, où les segments adjacents au segment médian (27;95;121;122;404) ont une largeur plus petite que la largeur du segment médian.

3. Corps d'emballage selon la revendication 1 et 2 comportant 1-10 segments de panneau avant (46;48;50;118) reliés consécutivement le long de l'axe longitudinal, adjacents aux segments de panneau présentant un bord commun et pliés le long dudit bord commun, sa surface inférieure étant orientée vers la surface supérieure du segment de panneau plié précédent et comportant 1-10 segments de panneau arrière (52;54;56;58;60;121) reliés consécutivement le long de l'axe longitudinal, des segments de panneau arrière adjacents ont un bord commun et sont pliés le long dudit bord commun de façon que leur surface supérieure soit orientée vers la surface inférieure du segment de panneau plié précédent.

4. Corps d'emballage selon l'une des revendications précédentes, où les éléments de chicane de fluide (16;82;204;410) sont réalisés en un matériau de bande disposé vers le haut et au loin de la surface supérieure ou inférieure de la bande.

5. Corps d'emballage selon l'une des revendications précédentes, où les éléments de chicane de fluide (16;82;204;410) sont moulés dans la bande.

6. Corps d'emballage selon l'une des revendications précédentes, où au moins quelques-uns des éléments de chicane de fluide (16;82;204;410) sont perpendiculaires à l'axe longitudinal des panneaux.

7. Corps d'emballage selon l'une des revendications précédentes, où la bande (12;90;120;200;300;400) est réalisée en métal, résine synthétique ou céramique.

8. Corps d'emballage selon l'une des revendications précédentes, dans lequel les ouvertures (408;316) sont des fentes oblongues disposées transversalement à l'axe longitudinal de la bande.

9. Corps d'emballage selon l'une des revendications précédentes, comportant en outre une charnière rotative (418;412) disposée le long d'au moins un desdits plis.

10. Corps d'emballage selon la revendication 9, où ledit pli présente une paire de charnières rotatives parallèles espacées sur chaque côté de la bande transversale du matériau de bande, et ladite bande forme un angle d'environ 90 degrés avec la surface des segments adjacents.

11. Corps d'emballage selon l'une des revendications précédentes, comprenant en outre au moins un panneau latéral (98;104;110;112) relié à un bord latéral d'un des panneaux empilés et plié pour être adjacent aux bords des panneaux empilés.

12. Procédé pour former un corps d'emballage selon la revendication 1 pour l'utilisation pour un contact avec un fluide, comprenant les étapes consistant à :
former une bande continue oblongue en un matériau flexible pliant présentant un motif d'ouvertures et de chicanes sous la forme d'un matériau de bande relevée, relié à un bord d'une pluralité desdites ouvertures;
réaliser des lignes de pliage espacées le long de l'axe longitudinal de la bande pour former des segments de panneaux plats présentant des lignes de pliage sur chaque bord avant de ceux-ci;
plier la bande le long d'une ligne de pliage avant entre un premier segment de panneau avant plat et un second segment de panneau plat de la bande jusqu'à ce que la surface inférieure d'un segment de panneau avant adjacent au second segment de panneau soit sensiblement parallèle à la surface supérieure du second segment de panneau; et
plier la bande le long d'une ligne de pliage arrière entre le deuxième segment de panneau plat et un troisième segment de panneau plat jusqu'à ce que la surface supérieure du troisième segment de panneau soit sensiblement parallèle à la surface inférieure du deuxième segment de panneau.

13. Procédé de fabrication d'un corps d'emballage selon la revendication 1, pour l'utilisation en contact avec un fluide, comprenant les étapes consistant à :
former des fentes dans une bande de matériau oblongue;
étirer la bande le long de l'axe longitudinal de telle sorte que les fentes s'élargissent dans des fentes oblongues et que le matériau de bande entre les fentes adjacentes soit relevé de la surface selon un angle de 10 degrés à 80 degrés; et
plier la bande de long des lignes de pliage transversalement à l'axe longitudinal de la bande jusqu'à ce que des segments de panneaux adjacents soient sensiblement parallèles les uns aux autres.

14. Procédé pour former un corps d'emballage selon la revendication 1 pour l'utilisation en contact avec un fluide, comprenant les étapes consistant à découper une bande continue pour former des chicanes et des lignes de pliage pour former des segments de panneaux;
relever les chicanes de la surface de la bande; et
plier la bande le long des lignes de pliage jusqu'à ce que les segments de panneaux soient sensiblement parallèles les uns aux autres.
